# EUROPÄISCHE PATENTSCHRIFT

(11) **EP 2 767 152 B1**
(45) Veröffentlichungstag und Bekanntmachung des Hinweises auf die Patenterteilung: **28.03.2018**
(21) Anmeldenummer: 13198342.1
(22) Anmeldetag: 19.12.2013
(51) Int. Cl.: A01D 41/14

(54) **Verfahren zum Betreiben einer selbstfahrenden Erntemaschine sowie selbstfahrenden Erntemaschine**
Method for operating a self-propelled harvesting machine and self-propelled harvesting machine
Procédé de fonctionnement d'une moissonneuse automotrice et moissonneuse automotrice

(30) Priorität: 14.02.2013 DE 102013101444
(43) Veröffentlichungstag der Anmeldung: 20.08.2014
(73) Patentinhaber: CLAAS Selbstfahrende Erntemaschinen GmbH, 33428 Harsewinkel (DE)
(72) Erfinder: Bürmann, Dominik, 33415 Verl (DE); Beschorn, Udo, 33428 Harsewinkel (DE); Kohlhase, Martin, Dr., 33428 Harsewinkel (DE)

(56) Entgegenhaltungen:
- EP-A1- 1 985 170
- EP-A1- 2 055 173
- US-B2- 7 869 922

## Beschreibung

Die vorliegende Erfindung betrifft ein Verfahren zum Betreiben einer selbstfahrenden Erntemaschine sowie eine selbstfahrende Erntemaschine gemäß den Oberbegriffen der unabhängigen Ansprüche 1 und 8.
Aus der EP 2 055 173 A1 ist ein Verfahren zum Betreiben einer selbstfahrenden Erntemaschine gemäß dem Oberbegriff des Anspruches 1 bekannt. Die EP 2 055 173 A1 beschreibt ein Verfahren zur Steuerung eines Schneidwerkes an einem selbstfahrenden Mähdrescher durch ein Steuerungssystem, welches das Positionieren von Haspel und Messerbalken in aufeinander abgestimmter Relation ermöglicht. Hierzu werden die Positionsveränderungen von Haspel und Messerbalken überwacht und ausgewertet, um automatisch eine Korrekturbewegung durchzuführen, um die bestehende Relation der Positionierung zueinander aufrecht zu erhalten. Hierzu weist das Steuerungssystem mehrere, für die Bewegung des Messerbalkens spezifische Eingabemittel auf, mit denen der Messerbalken in horizontaler Richtung innerhalb eines Bewegungsbereiches positionierbar ist. Die Haspel ist mittels weiterer spezifischer Eingabemittel in horizontaler und vertikaler Richtung positionierbar. Die Betätigung der Eingabemittel erfolgt durch eine Bedienperson, die die Position von Haspel und Messerbalken in Abhängigkeit von der Erntegutart sowie Erntebedingungen steuert. Bei einem Ablegen des Schneidwerkes auf einem dafür vorgesehenen Transportwagen zu Transportzwecken müssen sowohl die Haspel als auch der Messerbalken in eine definierte, für den zulässigen Transport definierte Position überführt werden, um die für die Straßenfahrt zulässige Transportbreite einzuhalten. Hierzu muss der Bediener durch eine entsprechende Betätigung der jeweiligen Eingabemittel für die Haspel und den Messerbalken das Steuerungssystem ansteuern, damit die die Haspel und der Messerbalken in die für den Transport zulässige Stellung überführen werden. Das Überführen des Schneidwerkes in die Transportstellung durch den Bediener ist nicht immer gewährleistet, beispielsweise in Folge von Unachtsamkeit oder Bequemlichkeit, so dass es zu einer Vielzahl von Problemen kommen kann. Beispielsweise können in Folge der nicht abgesenkten und/oder nicht eingefahrenen Haspel beziehungsweise dem nicht eingefahrenen Messerbalken Beschädigungen am Transportwagen sowie am Schneidwerl selbst auftreten. Des Weiteren verbleibt Hydrauliköl im Ölkreislauf des Schneidwerkes, welches gegebenenfalls im Ölkreislauf des Mähdreschers fehlt.

Aufgabe der vorliegenden Erfindung ist es, ein Verfahren zum Betreiben einer selbstfahrenden Erntemaschine sowie eine selbstfahrende Erntemaschine bereitzustellen, die sich durch einen höheren Bedienkomfort auszeichnen.

Diese Aufgabe wird erfindungsgemäß durch die kennzeichnenden Merkmale des Verfahrensanspruches 1 sowie des Vorrichtungsanspruches 8 gelöst.

Gemäß dem Anspruch 1 wird vorgeschlagen, dass dem Eingabemittel durch die Steuerungsvorrichtung in Abhängigkeit von einer Betriebszustandsänderung eine von der ersten Funktion abweichende zweite Funktion zugewiesen wird, die für das Arbeitsaggregat in einem vom Erntebetrieb abweichenden Betriebszustand spezifisch ist. Die temporäre Zuweisung einer zweiten Funktion anstelle einer ersten dem Eingabemittel zugeordneten Funktion, wobei beide Funktionen für das Arbeitsaggregat spezifisch sind, hat den Vorteil, dass einerseits die Anzahl an Eingabemitteln, die für das Ausführen der beiden Funktionen zur Ansteuerung des Arbeitsaggregates erforderlich sind, begrenzt ist, und dass andererseits sichergestellt ist, dass es durch die Mehrfachbelegung nicht zu Fehlbedienungen kommen kann, da die Funktionszuweisung aggregatspezifisch erfolgt und sich am jeweiligen Betriebszustand orientiert.

Vorzugsweise kann durch die zweite Funktion das Arbeitsaggregat derart angesteuert werden, dass eine automatische Überführung des Arbeitsaggregates in eine Arbeitsstellung oder eine Transportstellung beziehungsweise Parkposition durchgeführt wird. Durch eine einfache Betätigung des Eingabemittels lässt sich das Arbeitsaggregat in eine der beiden Stellungen überführen, wobei sichergestellt ist, dass einzelne Komponenten des Arbeitsaggregates in der Transportstellung entsprechende Postionen zueinander einnehmen, die einen sicheren Straßentransport erlauben. Beispielhaft sei ein an der Erntemaschine anbringbares Vorsatzgerät genannt, welches von einem Transportwagen zum Zwecke der Straßenfahrt aufgenommen wird. Um zu gewährleisten, dass keine Komponente des Vorsatzgerätes über die zulässige Transportbreite hinausragt, werden diese automatisch nach der Betätigung des Eingabemittels in ihre entsprechende Transportposition überführt. Ein Bediener der Erntemaschine muss nicht mehr darauf achten, dass die Komponenten des Vorsatzgerätes durch die gezielte manuelle Betätigung entsprechender Eingabemittel für die jeweilige Komponente vor der Ablage des Vorsatzgerätes auf dem Transportwagen in ihre Transportposition überführt werden. Somit lassen sich auch Beschädigungen des Transportwagens bei der Ablage des Vorsatzgerätes auf diesen vermeiden. Ein weiterer Vorteil stellt sich bei der automatischen Überführung in die Transportstellung beziehungsweise Parkposition ein, da während des Anfahrens der Transportstellung ein stetiges Durchströmen der Hydraulikzylinder gewährleistet ist, um die Parallelführung der Kolben zu gewährleisten.

Bevorzugt kann die Betätigungsdauer des Eingabemittels zur Überführung in eine der beiden Stellungen, die Arbeitsstellung oder die Transportstellung, in Abhängigkeit von der Fahrgeschwindigkeit der Erntemaschine bestimmt werden. Unter dem Aspekt der Betriebssicherheit wird die erforderliche Betätigungsdauer des Eingabemittels nach Zuweisung der zweiten Funktion Fahrgeschwindigkeitsabhängig bestimmt. Hierzu wird ein Geschwindigkeitsgrenzwert in der Steuerungsvorrichtung hinterlegt, mit dem die aktuelle Fahrgeschwindigkeit abgeglichen wird. Wird dieser Geschwindigkeitsgrenzwert überschritten, so ist eine einmalige Betätigung des Eingabemittels ausreichend, um die automatische Überführung des Arbeitsaggregates in die Transportstellung oder die Arbeitsstellung zu veranlassen. Wird hingegen dieser Geschwindigkeitsgrenzwert durch die Fahrgeschwindigkeit der Erntemaschine unterschritten, muss das Eingabemittel dauerhaft betätigt werden, damit das Arbeitsaggregat in die Transportstellung oder die Arbeitsstellung überführt wird.

Hierzu kann die Betätigungsdauer des Eingabemittels überwacht werden. Durch die Überwachung der Betätigungsdauer wird sichergestellt, dass ein Unterbrechen der dauerhaften Betätigung des Eingabemittels zu einer sofortigen Unterbrechung der Überführung des Arbeitsaggregates in die Transportstellung oder die Arbeitsstellung führt.

Insbesondere kann das Arbeitsaggregat automatisch in die Arbeitsstellung überführt werden, die als letzte Arbeitsstellung des Arbeitsaggregates von der Steuerungsvorrichtung gespeichert wurde. Dies trägt zur Komforterhöhung für den Bediener bei. Weiterhin kann das Erreichen der Arbeitsstellung oder der Transportstellung sensorisch überwacht werden. Das Erreichen der Arbeitsstellung oder der Transportstellung kann dem Bediener entsprechend signalisiert werden. Hierzu wird an dem Schneidewerk bereits vorhandene Sensorik, wie die Sensorik zur Haspelhöhensteuerung oder der Sensorik zur Überwachung der Längenverstellung des Schneidwerktisches verwendet, deren Signale von der Steuerungsvorrichtung ausgewertet werden. Entsprechend lassen sich auch etwaige Fehlfunktionen feststellen und signalisieren.

Vorteilhafterweise kann mit dem Erreichen der Arbeitsstellung oder der Transportstellung auf Grund der Betätigung des Eingabemittels dem Eingabemittel die erste Funktion zugewiesen werden. Auf diese Weise wird gewährleistet, dass die zweite Funktion, die dem Eingabemittel zugewiesen worden ist, automatisch wieder durch die originär hinterlegte erste Funktion ersetzt wird. Dem Bediener stehen somit automatisch wieder die Funktionen zur Verfügung, die für den Betrieb des Arbeitsaggregates wesentlich sind.

Gemäß dem Anspruch 8 wird vorgeschlagen, dass dem Eingabemittel durch die Steuerungsvorrichtung in Abhängigkeit von einer Betriebszustandsänderung eine von der ersten Funktion abweichende zweite Funktion zuweisbar ist, die für das Arbeitsaggregat in einem vom Erntebetrieb abweichenden Betriebszustand spezifisch ist.

Hierbei kann die zweite Funktion der Überführung des Arbeitsaggregates in eine Arbeitsstellung oder Transportstellung dienen.

Insbesondere kann die Ausführbarkeit der zweiten Funktion von der Fahrgeschwindigkeit der Erntemaschine abhängig sein. Hierdurch können Gefahrensituationen vermieden werden, die sich bei einer automatischen Betätigung des Arbeitsaggregates ergeben.

Vorzugsweise kann die Erntemaschine als ein Mähdrescher ausgeführt sein.

In bevorzugter Weiterbildung kann das Arbeitsaggregat ein Schneidwerk sein.

Die vorliegende Erfindung wird nachstehend anhand eines in den Zeichnungen näher dargestellten Ausführungsbeispieles näher erläutert.

Es zeigen:
- Fig. 1: eine schematische Seitenansicht einer selbstfahrenden Erntemaschine;
- Fig. 2: einen vergrößerten Ausschnitt eines Schneidwerks gemäß Fig. 1;
- Fig. 3: einen schematische Ansicht eines Schneidwerks mit längenveränderbarer Schneidwerksmulde;
- Fig. 4: einen Bedienhebel einer selbstfahrenden Erntemaschine;
- Fig. 5: ein Flussdiagramm zur Veranschaulichung des Verfahrens.

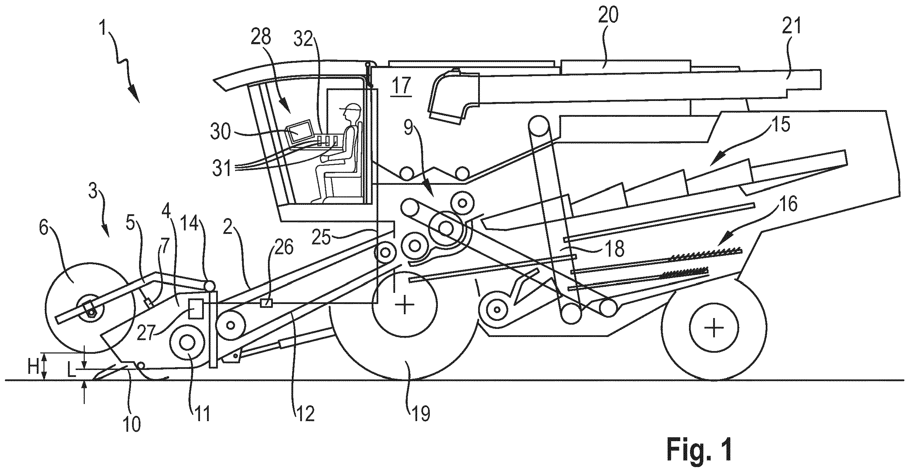

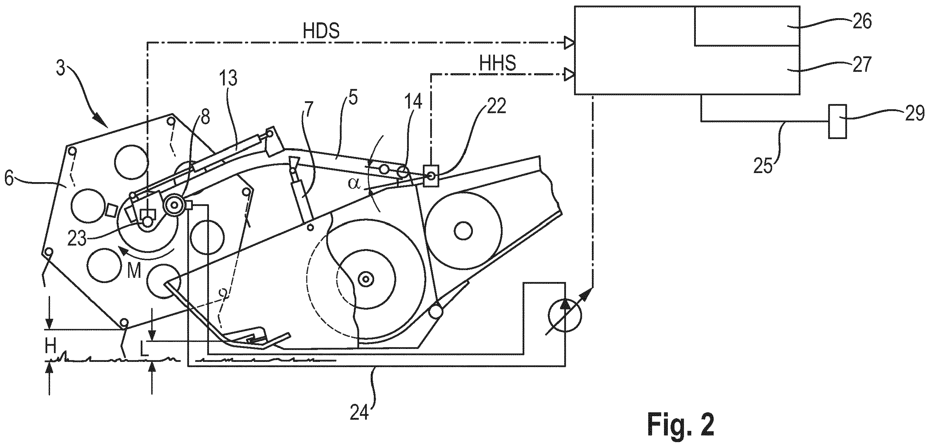

In der Fig. 1 ist eine als Mähdrescher 1 ausgeführte selbstfahrende Erntemaschine in schematischer Seitenansicht dargestellt, an deren in vertikaler Richtung schwenkbarem Einzugsschacht 2 ein als Schneidwerk 3 ausgeführtes Vorsatzgerät angeordnet ist. Mit dem schwenkbaren Einzugsschacht 2 ist das Schneidwerk 3 auf eine gewünschte Schnitthöhe L einstellbar. Das Schneidwerk 3 besteht aus einem Schneidtisch 4, und aus einer an zwei höhenverschwenkbaren Haspeltragarmen 5 an dem Schneidtisch 4 befestigten Haspel 6. Zwischen dem Schneidtisch 4 und den Haspeltragarmen 5 sind zwei Hydraulikzylinder 7 angelenkt, mit denen die Haspeltragarme 5 um einen Gelenkpunkt 14 drehend, verschwenkt werden und dabei die Höhenlage der Haspel 6 ändern. Zusätzlich sind zwischen den Haspeltragarmen 5 und der Haspel 6 zwei weitere Hydraulikzylinder 13 angebracht, mit denen die Lage der Haspel in horizontaler Richtung in Relation zum Schneidtisch 4 eingestellt wird, wie in Fig. 2 dargestellt ist.

Die mit einem als Hydraulikmotor 8 ausgeführten Motor rotierend angetriebene Haspel 6 sorgt für eine kontinuierliche Annahme des Erntegutes sowie für dessen gleichmäßige Förderung durch das Schneidwerk 3 und den Einzugsschacht 2 zu einer an sich bekannten und daher hier nicht näher erläuterten Drescheinrichtung 9 des Mähdreschers 1. Das Erntegut wird mit einem an der vorderen Kante des Schneidtisches 4 angebrachten Messerbalken 10 abgeschnitten und das abgeschnittene Erntegut anschließend mit Hilfe der Haspel 6 zu einer im Schneidtisch 4 angeordneten, rotierend angetriebenen Einzugsschnecke 11 gefördert. Die Einzugsschnecke 11 führt das Erntegut dem Einzugsschacht 2 zu. In dem Einzugsschacht 2 läuft ein Schrägförderer 12, der das Erntegut zur Drescheinrichtung 9 weiterfördert. Der Drescheinrichtung 9 nachgeordnet ist eine Abscheidevorrichtung 15, hier in Gestalt eines Hordenschüttlers, angeordnet. Alternativ kann die Abscheidevorrichtung 15 auch als Abscheiderotor ausgeführt sein. Das von der Drescheinrichtung 9 sowie der Abscheidevorrichtung 15 abgegebene Erntegut wird einer Reinigungsvorrichtung 16 zugeführt, in welcher Korn von den übrigen Bestandteilen des Erntegutes separiert wird. das die Reinigungsvorrichtung 16 verlassende gereinigte Erntegut gelangt über einen so genannten Kornelevator 18 in einen Korntank 17. Zur Entleerung des Korntankes 17 ist eine Korntankentleervorrichtung mit einem Korntankentleerrohr 21 vorgesehen, durch welches das Korn an einen Ladewagen übertragen wird. Als Arbeitsaggregate der Erntemaschine 1 werden nachfolgend diejenigen Vorrichtungen bezeichnet, die der Bearbeitung beziehungsweise Verarbeitung des aufgenommenen Erntegutes dienen.

Die Steuerung der Arbeitsaggregate des Mähdreschers 1 erfolgt durch eine Steuerungsvorrichtung 28, die über ein Bussystem 25 mit den Arbeitsaggregaten kommuniziert, um diese zu steuern oder zu regeln. Die Steuerungsvorrichtung 28 umfasst eine Anzeigeeinheit 30, eine Datenverarbeitungsvorrichtung sowie Eingabemittel 31, die beispielsweise als Schalter, Bedienhebel, Tastatur sowie als Touchscreen ausgeführt sein können, die an einer Bedienkonsole 32 angeordnet sind. Weiterhin ist durch Kopplungselemente 26 eine am Schneidwerk 3 angeordnete Steuereinheit 27 an das Bussystem 25 angeschlossen. Der Mähdrescher 1 weist einen Verbrennungsmotor 20 auf, der einen Fahrantrieb zum Antrieb der Vorderräder 19 des Mähdreschers 1, einen Dreschwerkantrieb zum Antrieb der Drescheinrichtung 9 und einen Schneidwerksantrieb zum Antrieb des Schneidwerks 3 antreibt. Auch die übrigen Arbeitsaggregate des Mähdreschers 1, wie die Abscheidevorrichtung 15 und die Reinigungsvorrichtung 16, werden durch von dem Verbrennungsmotor angetriebene Antriebe angetrieben. Der Fahrantrieb ist unabhängig von dem Dreschwerkantrieb, dem Schneidwerksantrieb oder den übrigen die Arbeitsaggregate antreibenden Antrieben betreibbar, um bei einem Wechsel vom Erntebetrieb in den Straßenfahrbetrieb die hierfür nicht notwendigen Antriebe abschalten zu können. Die Abschaltung der Arbeitsaggregate erfolgt durch den Bediener durch eine entsprechende Eingabe über eines der Eingabemittel 31.

Zur optimalen Aufnahme des Ernteguts ist das Schneidwerk 3 beweglich ausgeführt, indem das Schneidwerk 3 in seiner Höhe wie auch in seiner Querneigung geführt wird. Die vertikale Höhenverstellung, das heißt der Längsneigungsausgleich in Fahrtrichtung wie auch die Veränderung der Querneigung des Schneidwerkes 3, erfolgt in Abhängigkeit von dem aktuellen Bodenniveau und dient damit einer gleichmäßigen Stoppelhöhe des abgeernteten Ernteguts.

Fig. 2 zeigt einen Ausschnitt des Schneidwerks 3 des Mähdreschers 1 gemäß Fig. 1 einschließlich der dort angeordneten Sensoren 22, 23 sowie die mit einem Datenspeicher 26 und einem Mikroprozessor ausgestattete Steuereinheit 27, die der Steuerung des Schneidwerkes 3 dient. Die momentane Haspelhöhe H der Haspel 6 wird mit einem im Gelenkpunkt 14 angebrachten Drehwinkelsensor 22 gemessen, der einen Drehwinkel α der Haspeltragarme 5 misst. Ein von dem Drehwinkelsensor 22 erzeugtes Signal HHS ist direkt proportional zur Haspelhöhe H.

Der Hydraulikmotor 8 wird von einem hydraulischen Antriebsystem 24 angetrieben. In dem hydraulischen Antriebsystem 24 ist ein Drucksensor 23 installiert, mit dem ein hydraulischer Druck sensiert wird, der sich abhängig vom Haspeldrehmoment M ändert. Ein von dem Drucksensor 23 erzeugtes Signal HDS ist proportional zu einer an der Haspel 6 wirkenden Belastung. Die Belastung der Haspel 6 wird durch die Ermittlung der auf die Haspel 6 wirkenden Zugkraft FH bestimmt, die durch das Haspeldrehmoment M definiert ist. Die Signale HHS und HDS werden der mit dem Drehwinkelsensor 22 und dem Drucksensor 23 verbundenen Steuereinheit 27 zugeführt, die das hydraulische Antriebssystem 24 steuert.

Weiterhin kann vorgesehen sein, dass ein Schneidwerk eine Schneidwerksmulde aufweist, die aus einem feststehenden Teil und einem beweglichen Teil besteht, um die Länge des Schneidtisches bei der Verarbeitung verschiedener Erntegutarten variieren zu können. Mit der Veränderung der Lage des beweglichen Muldenteiles der Schneidwerksmulde gegenüber dem starren Muldenteil muss sichergestellt werden, dass die Haspel bei jeder möglichen Relativstellung des Messerbalkens mit letzterem nicht kollidieren kann. Hierzu wird die Relativlage des beweglichen Muldenteiles zum feststehenden fortlaufend ermittelt und die zwecks Einhaltung eines Mindestabstandes der Haspel zum Messerbalken erforderliche Mindesthöhenlage der Haspel entsprechend der jeweiligen Relativstellung durch Beeinflussung von Elektromagnetventilen geregelt. Auf einfache Art und Weise ist dabei mit der Seitenwand des beweglichen Muldenteiles eine Steuerkurve verbunden, mit der ein an der Haspel befestigter Sensor zusammenwirkt, wobei der Sensor auf die Elektromagnetventile der Kolbenzylindereinheit einwirkt, die zum Anheben und Absenken der Haspel vorgesehen sind. Die Steuerung des beweglichen Muldenteiles wie auch der Haspel erfolgt dabei ebenfalls durch die Steuereinheit am Schneidwerk.

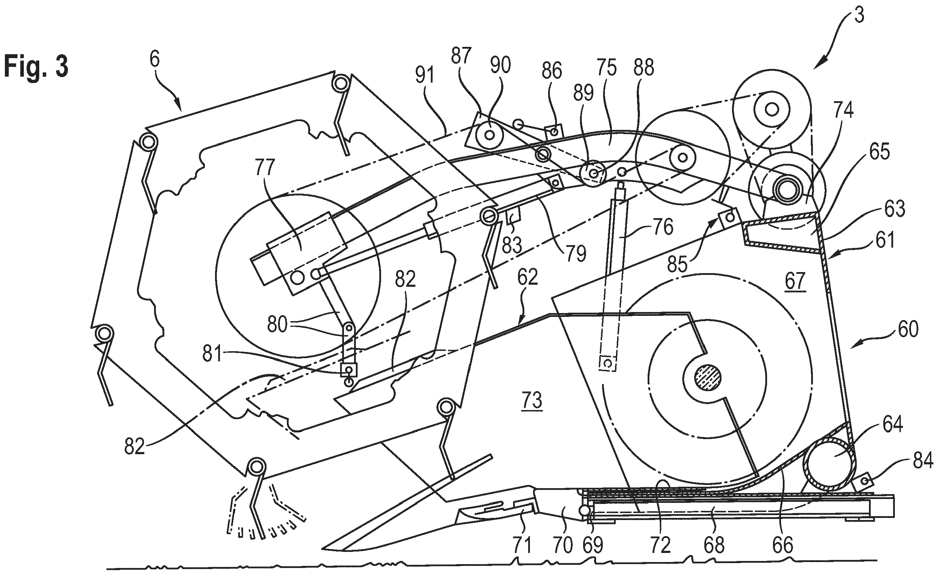

In Fig. 3 ist ein Schneidwerk 3 mit einer derartige Schneidwerksmulde 60 dargestellt, die aus einem feststehenden Teil 61 und einem beweglichen Teil 62 besteht. Der feststehende Teil 61 besteht aus einem hinteren Grundrahmen 63, einem Tragrohr 64 und einem Verstärkungsprofil 65. Das Bodenblech 66 ist über das Tragrohr 64 mit dem Grundrahmen 63 fest verbunden. Die Seitenwandungen 67 sind sowohl mit dem Boden wie auch mit dem Grundrahmen 63 verbunden. Unterhalb des Bodenbleches 66 sind mehrere im Abstand zueinander angeordnete Kolbenzylindereinheiten 68 vorgesehen, deren Kolbenstange 69 an einem Querträger 70 angreifen, der den Messerbalken 71 trägt. Mit dem Querträger 70 ist ein weiteres Bodenblech 72 verbunden, welches in der in der Fig. 3 dargestellten Lage das Bodenblech 76 überlappt. Mit dem Bodenblech 72 und dem Träger 70 sind Seitenwände 73 verbunden, so dass sich aus dem Bodenblech 72 und den Seitenwänden 77 mit dem Träger 70 und dem Messerbalken 71 der verschiebliche Teil 62 der Schneidwerksmulde 60 ergibt. Durch Betätigung der Kolbenzylindereinheiten 68 kann dann die Relativlage des beweglichen Teils 62 der Schneidwerksmulde 60 zum feststehenden Teil 61 der Schneidwerksmulde 60 verändert werden.

Auf das Verstärkungsprofil 65 des feststehenden Teils 61 der Schneidwerksmulde 60 sind Konsolen 74 aufgeschraubt, in denen zwei parallel zueinander angeordnete Tragarme 75 gelagert sind. Diese Tragarme 75 sind über Kolbenzylindereinheiten 76 anhebbar und absenkbar ausgebildet. Auf die Tragarme 75 sind Schlitten 77 aufgesetzt, an denen die Haspel 6 antreibbar gelagert ist. Die Schlitten 77 können durch Betätigung von Kolbenzylindereinheiten 79 auf den Tragarmen 75 hin und her verschoben werden. Wie aus der Fig. 3 zu erkennen ist, ist mit zumindest einem Schlitten 77 ein Winkelhebel 80 fest verbunden, der an seinem dem Schlitten 77 abgewandten Ende einen Mikroschalter 81 trägt. Diesem Mikroschalter 81 ist eine Steuerbahn 82 zugeordnet, die auf einer der Seitenwände 73 des beweglichen Teils 62 der Schneidwerksmulde 60 montiert ist. Werden nun die Kolbenzylindereinheiten 68 betätigt, fährt der Messerbalken 71 aus der in Fig. 3 dargestellten Lage nach links aus. Dabei läuft der Mikroschalter 81 beziehungsweise die ihm zugeordnete, nicht dargestellte Laufrolle auf die Kurve 82 auf und betätigt hierdurch den Mikroschalter 81. Eine solche Betätigung bewirkt, dass die Kolbenzylindereinheiten 76 so lange im Sinne "heben" betätigt werden, bis der Mikroschalter 21 keinen Kontakt mehr mit der Steuerkurve 82 hat. Aus dieser Lage heraus kann die Haspel 6 selbstverständlich vom Bediener durch weiteres Betätigen der Kolbenzylindereinheiten 76 noch mehr angehoben werden. Der Haspel 6 ist ein Elektromagnetventil 83 mit Schaltmöglichkeiten für die Stellungen Heben und Senken zugeordnet. Diese beiden Schaltmöglichkeiten können vom Bediener angesteuert werden. Anstelle der beschriebenen mechanischen Lösung zur Überwachung der Haspelposition kann eine elektronische Lösung vorgesehen sein, bei welcher die Funktionen von Schlitten 77, Winkelhebel 80 und Mikroschalter 81 durch ein elektronisches Kennfeld zur Ansteuerung der Haspel 6 ersetzt werden, welches in der Steuerungsvorrichtung 28 hinterlegt ist.

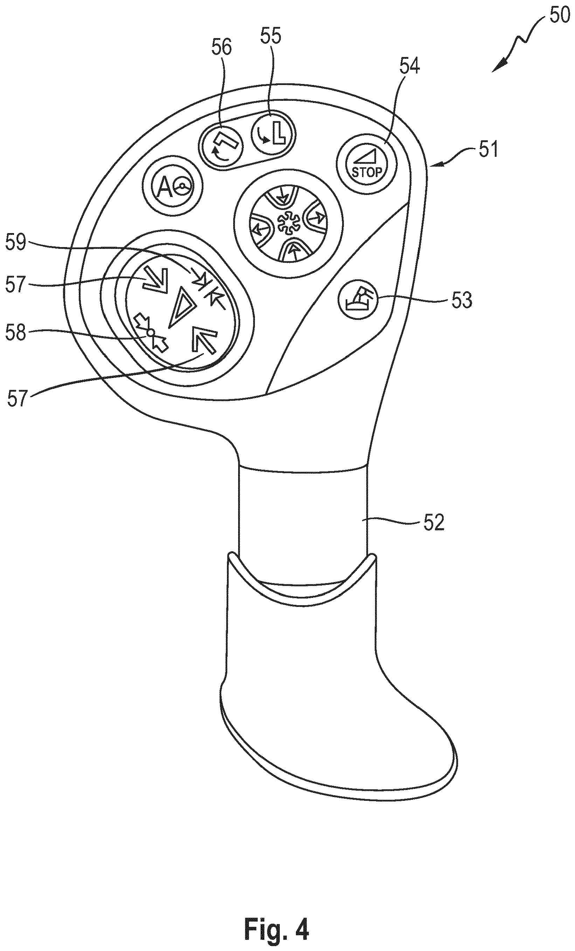

Weiterhin ist zumindest einer Kolbenzylindereinheit 68 ein Wegaufnehmer 84 zugeordnet, der das Maß, um den der Messerbalken 71 aus seiner völlig eingezogenen Stellung ausgefahren ist, feststellt und ein korrespondierendes Signal bereitstellt. Des Weiteren ist zumindest einem der Tragarme 75 der Haspel 6 ein Drehwinkelgeber 85 zugeordnet, der ausgehend von einem Referenzpunkt die jeweilige Winkellage des Tragarms 75 zum Referenzpunkt ermittelt und ein korrespondierendes Signal bereitstellt. Ein weiterer Drehwinkelgeber 86 ist auf zumindest einem der Tragarme 75 montiert und wird von der jeweiligen Winkellage eines Hebels 87 beeinflusst. Dieser Hebel 87 ist über eine Schwenkachse 88 schwenkbar am Tragarm 75 gelagert. Zu beiden Enden weist der Hebel 87 Umlenkrollen 89 und 90 auf, über die die Antriebskette 91 für die Haspel 6 geführt ist. Je nach Lage der Schlitten 77 der Haspel 6 auf den Tragarmen 75 wird der Hebel 87 verschwenkt und hierdurch der Drehwinkelgeber 86 beeinflusst. Die von dem Drehwinkelgeber 86 festgestellte Lage des Hebels 87 wird dann ebenfalls als ein korrespondierendes Signal zur weiteren Verarbeitung bereitstellt. Die Haspelhöhensteuerung, wie sie anhand des in Fig. 2 dargestellten Schneidwerkes 3 beschrieben wurde, ist entsprechend auch auf das in Fig. 3 dargestellte Schneidwerk 3 übertragbar. Wie bereits ausgeführt können die Eingabemittel 31 unter anderem als Schalter oder Bedienhebel ausgeführt sein, denen spezifische Funktionen zugeordnet sind, um die Arbeitsaggregate anzusteuern. Fig. 4 zeigt eine perspektivische Ansicht eines Griffkopfes 51 eines als Multifunktionshebel 50 ausgeführten Eingabemittels 31, der der Steuerung des Mähdreschers 1 dient. An die Unterseite des Griffkopfs 51 ist ein hohler Stutzen 52 angeformt, der vorgesehen ist, um einen in Fig. 4 nicht gezeigten Schaft des Multifunktionsgriffs 50 aufzunehmen, der den Griffkopf 51 mit einem Gelenk im Armaturenbrett verbindet. An dem Multifunktionsgriffs 50 sind eine Vielzahl von Schaltern 53, 54, 55, 56, 57, 58, 59 angeordnet, die der Bedienung zumindest zweier Arbeitsaggregate des Mähdreschers 1, hier dem Schneidwerk 3 und dem Korntankentleerrohr 21, dienen. So ist ein Schalter 58 der Steuerungseinrichtung 28 als Eingabemittel 31 mit einer für das Arbeitsaggregat Schneidwerk 3 spezifischen ersten Funktion F1, der Schnitthöhenregelung des Schneidwerkes 3, zugeordnet. Ein Schalter 59 weist als spezifische Funktion F1 die Schnitthöhenvorwahl auf. Das Schneidwerk 3 ist durch die Betätigung des Schalters 54 abschaltbar. Weiterhin ist ein nicht dargestellter Schiebeschalter am Griffkopf 51 angeordnet, der dem Ein- und Ausfahren der des beweglichen Teils 62 der Schneidwerksmulde 60 dient.

Weiterhin sind Schalter 53, 55 und 56 an dem Multifunktionsgriff 50 angeordnet. Mit dem Schalter 53 ist die Korntankentleerung aktivierbar, während mit den Schaltern 55 und 56 das Korntankentleerrohr 21 ein- und ausschwenkbar ist.

Da durch die Anordnung einer Vielzahl von Schaltern oder Hebeln als Eingabemittel 31 an einer Bedienkonsole 32 einer selbstfahrenden Erntemaschine sich diese für eine Bedienperson unübersichtlich darstellt und dadurch das Handling der Erntemaschine erschwert wird, wird vorgeschlagen, ein oder mehrere Eingabemittel 31, die jeweils mit einer spezifischen ersten Funktion F1 zur Ansteuerung eines Arbeitsaggregates belegt sind, mit einer für das korrespondierende Arbeitsaggregat spezifischen zweiten Funktion F2 zu belegen, die jedoch nur dann zur Verfügung steht, wenn sich die Erntemaschine nicht im Betriebszustand Erntebetrieb befindet, das heißt, wenn auf Grund einer durch den Bediener sachgemäß herbeigeführten Situation die Erntemaschine nicht zur Aufnahme und Verarbeitung von Erntegut bereit ist.

In dem vorliegend beschriebenen Ausführungsbeispiel ist es vorgesehen, dass der für die Ansteuerung der Schnitthöhenregelung vorgesehene Schalter 58 mit der zweiten Funktion F2 belegbar ist, welche das Überführen des Schneidwerkes 3 in eine Transportstellung T oder Parkposition umfasst. In der Transportstellung T werden die längenveränderbare Schneidwerksmulde 60 und die Haspel 77 vollständig eingefahren, so dass das Schneidwerk 3 in der Transportstellung T die geringstmögliche Transportbreite aufweist. Um sicherzustellen, dass das Umschalten zwischen der ersten Funktion F1 und der zweiten Funktion F2 des Schalters 58 ausschließlich in den dafür vorgesehenen Situationen erfolgt, ist vorgesehen, dass die Zuweisung der ersten Funktion F1 und der zweiten Funktion F2 durch die Steuerungsvorrichtung 28 nur in Abhängigkeit von einer Betriebszustandsänderung erfolgt. Hingegen kann die erste Funktion F1 des Schalters 59, die Schnitthöhenvorwahl, durch eine zweite spezifische Funktion F2 ersetzt werden, welche das Überführen in die zuletzt gespeicherte Arbeitsposition des Schneidwerkes 3 umfasst.

Unter einer Betriebszustandsänderung wird das manuelle Abschalten der Antriebe der Arbeitsaggregate durch den Bediener verstanden. Im Fall des Schneidwerkes 3 lässt sich dieses durch die Betätigung des Schalters 54 am Multifunktionsgriff 50 gezielt ausschalten. Hierdurch ist sichergestellt, dass eine automatisierte Zuweisung der zweiten Funktion F2 anstelle der dem Eingabemittel 31 zugewiesenen ersten Funktion F1 nur dann stattfindet, wenn eine Betriebszustandsänderung explizit eingeleitet wurde. Dadurch soll vermieden werden, dass bei einer Notabschaltung eines Arbeitsaggregates, beispielsweise durch die Aufnahme eines Fremdkörpers durch das Schneidwerk 3, dessen Detektion zu einer Einleitung eines Schnellstopps führt, eine automatische Zuweisung durchgeführt wird.

Die Funktionsweise wird nachfolgend anhand des Schneidwerkes 3 und dem zugehörigen Eingabemittel 31 zur Steuerung des Ausgleichs der Querneigung und der Höhenneigung des Schneidwerkes 3 auf Grund einer sich ändernden Bodenkontur erläutert. Während des Erntebetriebes weisen die Haspel 6 und der Messerbalken 10 in Abhängigkeit von dem zu bearbeitenden Erntegut und den vorliegenden Erntebedingungen spezifische Arbeitsstellungen A auf, in denen gewährleistet ist, dass die Zinken der Haspel 6 nicht mit dem Messerbalken 10 kollidieren. Der Messerbalken 10 ist, wie weiter oben ausgeführt, gemeinsam mit dem beweglichen Teil der Schneidwerksmulde verschiebbar, um eine an die Erntegutart angepasste Position einzunehmen. Auf Grund der großen Arbeitsbereite von Schneidwerken werden diese üblicherweise auf einem Transportwagen abgelegt, damit der Verbund aus Mähdrescher 1 und Schneidwerk 3 auf der Straße geführt werden kann. Um ein sicheres Ablegen des Schneidwerkes 3 auf dem Transportwagen zu gewährleisten, ist es erforderlich, dass die Haspel 6 in eine vollständig abgesenkte Stellung sowie im Fall eines längenveränderlichen Schneidwerks, wie es in Fig. 3 dargestellt ist, der bewegliche Teil 62 der Schneidwerksmulde 60 in eine eingezogene Position überführt wird. Der Schneidwerkstisch 4 und die zumindest eine Haspel 6 müssen eine zu Transportzwecken definierte Transportstellung T beziehungsweise Parkposition zueinander einnehmen, um Beschädigungen des Schneidwerkes 3 sowie des Transportwagens zu vermeiden. In der Transportstellung T ist zudem sichergestellt, dass die für die Straßenfahrt zulässige Transportbreite durch das Schneidwerk 3 nicht überschritten wird, beispielsweise durch die nicht vollständig eingefahrene Haspel 6. Ein weiteres Problem, welches auftreten kann, wenn die Transportstellung T von Haspel 6 und Schneidwerkstisch 4 zueinander nicht eingenommen wird, ist das Fehlen von Hydrauliköl im Hydraulikkreislauf des Mähdreschers 1, nachdem das Schneidwerk 3 von diesem abgekoppelt wurde.

Das Überführen in die Transportstellung T erfolgt durch die Betätigung von verschiedenen Eingabemitteln 31, von denen eines die Längenveränderung des Schneidwerktisches 4 steuert und das andere die Position der Haspel 6. Der Bediener des Mähdreschers 1 muss also bewusst darauf achten, die Eingabemittel 31 so lange zu betätigen, bis die Haspel 6 und der Schneidwerkstisch 4 ihre jeweilige Transportstellung T eingenommen haben.

Um die zuvor genannten Probleme zu vermeiden sowie den Bedienkomfort zu steigern, wird in Abhängigkeit von dem detektierten Betriebszustand des Schneidwerkes 3 und des Mähdreschers 1 bei Betätigung eines Eingabemittels 31 der Steuerungsvorrichtung 28 das Schneidwerk 3 automatisch in die Transportstellung T überführt. Hat der Bediener die Antriebe der Arbeitsaggregate im Inneren des Mähdreschers 1 abgeschaltet, weil der Erntevorgang beendet ist und das Schneidwerk 3 von dem Mähdrescher 1 abgekoppelt werden soll, so erfolgt eine automatische Zuweisung an das Eingabemittel 31 mit der von der ersten Funktion F1 abweichenden zweiten Funktion F2, die für das Schneidwerk 3 in einem von dem Erntebetrieb abweichenden Betriebszustand spezifisch ist. So wird gemäß dem beschriebenen Ausführungsbeispiel dem Schalter 58, welcher im Erntebetrieb mit der ersten Funktion F1 zur Schnitthöhenregelung des Schneidwerkes 3 belegt ist, die zweite Funktion F2 zugewiesen, welche die Ansteuerung des Schneidwerkes 3 zur automatischen Überführung in die Transportstellung T beinhaltet. Zudem wird die aktuelle Fahrgeschwindigkeit des Mähdreschers 1 aus Gründen der Betriebssicherheit berücksichtigt. Hierzu wird in der Steuerungsvorrichtung 28 ein Geschwindigkeitsgrenzwert hinterlegt, dessen Unter- oder Überschreiten sich unmittelbar auf den Betätigungsmodus des Eingabemittels 31 auswirken, um die Gefährdung Dritter bei der Überführung in die Transportstellung T auszuschließen. Wird ein Überschreiten des Geschwindigkeitsgrenzwertes festgestellt, so wird durch ein kurzzeitiges Betätigen des Eingabemittels 31 das Schneidwerk 3 in seine Transportstellung T überführt. Entspricht die aktuelle Fahrgeschwindigkeit dem Geschwindigkeitsgrenzwert oder unterschreitet diesen, so ist es aus Sicherheitsgründen erforderlich, dass die Bedienperson das Eingabemittel 31 dauerhaft betätigt, bis die Transportstellung T des Schneidwerkes 3 erreicht worden ist. Das Unterbrechen der dauerhaften Betätigung des Eingabemittels 31 führt in dieser Situation zu einer sofortigen Unterbrechung des Überführungsvorganges in die Transportstellung T.

Des Weiteren lässt sich diese Vorgehensweise analog auch auf das Überführen des Schneidwerkes 3 in eine Arbeitsstellung A übertragen. Nach der Aufnahme und der Ankopplung des Schneidewerkes 3 an den Mähdrescher 1, das heißt dem Anschluss des Schneidwerkes 3 an das Bussystem 25 sowie an den Hydraulikkreislauf des Mähdreschers 1, wird der Betriebszustand des Mähdreschers 1 überprüft. Sind die Arbeitsaggregate ausgeschaltet, so wird dem Eingabemittel 31 die zweite Funktion F2 zugewiesen, welche die Ansteuerung des Schneidwerkes 3 zur automatischen Überführung in die Arbeitsstellung A beinhaltet. Die Arbeitsstellung A definiert sich als die zuletzt erfasste Positionierung von Haspel 6 und Schneidwerkstisch während des vorangegangenen Erntebetriebes. Auch diese Vorgehensweise erfolgt unter Berücksichtigung der aktuellen Fahrgeschwindigkeit des Mähdreschers 1.

In Anbetracht zunehmender Schneidwerksbreiten muss auch eine Korntankentleervorrichtung in ihrer Länge angepasst werden, um einen entsprechenden Überladeabstand zwischen dem Mähdrescher 1 und einem Ladewagen realisieren zu können. Entsprechend kann die Korntankentleervorrichtung ein mehrteiliges Korntankentleerrohr aufweisen, wobei einzelne Abschnitte relativ zueinander teleskopierbar sind oder dass die einzelnen Abschnitte durch ein oder mehrere Gelenke miteinander verbunden sind, aufweisen, um welche einzelne Abschnitte der Korntankentleervorrichtung gegeneinander verschwenkbar sind, wodurch sich eine für die Straßenfahrt zulässige Gesamtlänge des Korntankentleerrohres des Mähdreschers 1 erreichen lässt. Hierzu ist zumindest ein Abschnitt des Korntankentleerrohres unter einem Winkel von 90° oder mehr abklappbar, vorzugsweise der Abschnitt, welcher beim Abtanken am weitesten von dem Mähdrescher entfernt ist. Dieser Abschnitt des Korntankentleerrohres befindet sich dann in einer am Mähdrescher anliegenden Transportposition, in der sich der Abschnitt beispielsweise quer zur Längsachse des Mähdreschers erstreckt, während sich der übrige Teil des Korntankentleerrohres parallel zur Längsachse erstreckt.

Demgemäß ist ein weiteres Anwendungsbeispiel die Ansteuerung des Arbeitsaggregates Korntankentleerrohres 21, welches durch die Betätigung der beiden Schalter 55, 56 am Multifunktionsgriff 50 aus einer Transportstellung T, in der das Korntankentleerrohr 21 vollständig am Mähdrescher 1 anliegt, wie in Fig. 1 dargestellt, in seine Arbeitsstellung A, in der sich das Korntankentleerrohr parallel zur Längsachse des Mähdreschers erstreckt, beziehungsweise in seine Korntankentleerposition Ü überführbar ist, in der sich das Korntankentleerrohr 21 im Wesentlichen senkrecht zur Längsachse des Mähdreschers 1 erstreckt. Ein dritter Schalter 53 dient dem Ein- und Ausschalten einer in dem Korntankentleerrohr 21 befindlichen Fördervorrichtung zum Abtanken des in dem Korntank 17 enthaltenen Erntegutes. Um eine Steigerung des Bedienkomforts zu erreichen, lässt sich beispielsweise der dritte Schalter 53, dem explizit als erste Funktion F1 das Ein- und Ausschalten der Fördervorrichtung zugewiesen ist, unter bestimmten Betriebsbedingungen eine zweite Funktion F2 zuweisen, die ebenfalls für das Korntankentleerrohr 21 spezifisch ist. Die zweite Funktion F2 umfasst das automatische Überführen des Korntankentleerrohres 21 in dessen Transportstellung T. Im einfachsten Fall beschränkt sich die Transportstellung T des Korntankentleerrohres 21 darauf, dass sich das Korntankentleerrohr 21 parallel zur Längsachse des Mähdreschers 1 erstreckt. Wie weiter oben beschrieben, erfolgt die Zuweisung der zweiten Funktion F2 nur unter der Voraussetzung, dass ein vom Erntebetrieb abweichender Betriebszustand detektiert wird. Demgemäß wird dem dritten Schalter 53 die zweite Funktion F2, die das automatische Überführen des Korntankentleerrohres 21 in die Transportstellung T ermöglicht, nur dann zugewiesen, wenn die Fördervorrichtung des Korntankentleerrohres 21 durch das Abschalten durch den Bediener außer Betrieb gesetzt wird.

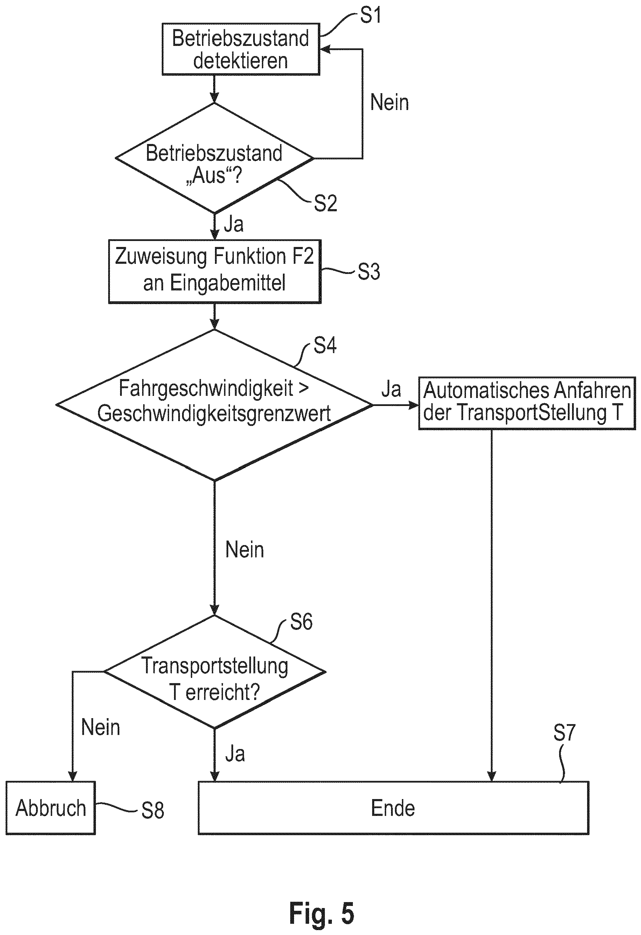

Das Verfahren zum Betreiben einer Erntemaschine, insbesondere eines Mähdreschers 1, wird anhand des in Fig. 5 dargestellten Flussdiagrammes erläutert. Zunächst wird in einem Schritt S1 der aktuelle Betriebszustand der Erntemaschine detektiert. In einem Schritt S2 wird geprüft, ob der aktuelle Betriebszustand der Erntemaschine dem im Erntebetrieb eingeschalteten oder ausgeschalteten Betriebszustand der Arbeitsaggregate, entspricht. Befinden sich die Arbeitsaggregate im eingeschalteten Zustand, so wird die Detektion gemäß dem Schritt S1 fortgesetzt. Wird hingegen festgestellt, dass die Arbeitsaggregate ausgeschaltet sind, wird in einem Schritt S3 dem Eingabemittel 31, im Fall des Schneidwerkes 3 dem Schalter 58 beziehungsweise im Fall des Korntankentleerrohres 21 dem Schalter 53, eine zweite Funktion F2 zugewiesen, die die im Betriebszustand Erntebetrieb dem Eingabemittel 31 zugeordnete erste Funktion F1 ersetzt.

Aus Gründen der Betriebssicherheit wird in einem Schritt S4 die aktuelle Fahrgeschwindigkeit mit einem Geschwindigkeitsgrenzwert verglichen. Wird der Geschwindigkeitsgrenzwert passiert, so führt das kurzzeitige Betätigen des Eingabemittels 31, dem die zweite Funktion zugewiesen wurde, in einem Schritt S5 zu einem automatischen Anfahren der Transportstellung T des Arbeitsaggregates.

Das Unterschreiten des Geschwindigkeitsgrenzwert hat zur Folge, dass die zweite Funktion F2 insoweit eingeschränkt wird, als dass zur Überführung des Arbeitsaggregates in die Transportstellung T das Eingabemittel 31 für die Dauer der Überführung in die Transportstellung betätigt werden muss. Das dauerhafte Betätigen der Eingabemittels 31 wird in Schritt S6 verifiziert, indem das Erreichen der Transportstellung T überwacht wird. Mit dem Erreichen der Transportstellung T endet das Verfahren.

Wird hingegen während des Überführens des Arbeitsaggregates in die Transportstellung T die Betätigung des Eingabemittels unterbrochen, führt dies zum sofortigen Unterbrechen der Ansteuerung und zum Stillsetzen des Arbeitsaggregates in Schritt S8. Ergänzend kann vorgesehen sein, dass mit dem Erreichen der Transportstellung T gemäß dem Schritt S6 oder bei einem Abbruch gemäß dem Schritt S8 die Zuweisung der zweiten Funktion F2 rückgängig gemacht wird, so dass das Eingabemittel wieder mit seiner originären Funktion F1 belegt ist.

**Bezugszeichenliste**

| | | | |
|---|---|---|---|
| **1** | Mähdrescher | **30** | Anzeigeeinheit |
| **2** | Einzugsschacht | **31** | Eingabemittel |
| **3** | Schneidwerk | **32** | Bedienkonsole |
| **4** | Schneidtisch | | |
| **5** | Haspeltragarm | **50** | Multifunktionshebel |
| **6** | Haspel | **51** | Griffkopf |
| **7** | Hydraulikzylinder | **52** | Stutzen |
| **8** | Hydraulikmotor | **53** | Schalter Korntankentleerung |
| **9** | Drescheinrichtung | **54** | Schalter Schneidwerk aus |
| **10** | Messerbalken | **55** | Schalter Korntankentleerrohr einschwenken |
| **11** | Einzugsschnecke | **56** | Schalter Korntankentleerrohr ausschwenken |
| **12** | Schrägförderer | **57** | Schalter Schneidwerk heben/senken |
| **13** | Hydraulikzylinder | **58** | Schalter Schnitthöhenregelung |
| **14** | Gelenkpunkt | **59** | Schalter Schnitthöhenvorwahl |
| **15** | Abscheidevorrichtung | **60** | Schneidwerksmulde |
| **16** | Reinigungsvorrichtung | **61** | Feststehender Teil |
| **17** | Kornelevator | **62** | Beweglicher Teil |
| **18** | Korntank | **63** | Grundrahmen |
| **19** | Vorderräder | **64** | Tragrohr |
| **20** | Antriebsmotor | **65** | Verstärkungsprofil |
| **21** | Korntankentleerrohr | **66** | Bodenblech |
| **22** | Drehwinkelsensor | **67** | Seitenwandung |
| **23** | Drucksensor | **68** | Kolbenzylindereinheit |
| **24** | Antriebssystem | **69** | Kolbenstange |
| **25** | Bussystem | **70** | Querträger |
| **26** | Datenspeicher | **71** | Messerbalken |
| **27** | Steuereinheit | **72** | Bodenblech |
| **28** | Steuerungsvorrichtung | **73** | Seitenwand |
| **29** | Kopplungselement | **74** | Konsole |
| **75** | Tragarm | | |
| **76** | Bodenblech | | |
| **77** | Schlitten | | |
| **79** | Kolbenzylindereinheit | | |
| **80** | Winkelhebel | | |
| **81** | Mikroschalter | | |
| **82** | Steuerbahn | | |
| **83** | Elektromagnetventil | | |
| **84** | Wegaufnehmer | | |
| **85** | Drehwinkelgeber | | |
| **86** | Drehwinkelgeber | | |
| **87** | Hebel | | |
| **88** | Schwenkachse | | |
| **89** | Umlenkrolle | | |
| **90** | Umlenkrolle | | |
| | | | |
| **S1** | Schritt | | |
| **S2** | Schritt | | |
| **S3** | Schritt | | |
| **S4** | Schritt | | |
| **S5** | Schritt | | |
| **S6** | Schritt | | |
| **S7** | Schritt | | |
| **S8** | Schritt | | |
| **H** | Haspelhöhe | | |
| **L** | Schnitthöhe | | |
| **M** | Haspeldrehmoment | | |
| **HDS** | Signal | | |
| **HHS** | Signal | | |
| **A** | Arbeitsstellung | | |
| **T** | Transportstellung | | |

## Patentansprüche

1. Verfahren zum Betreiben einer selbstfahrenden Erntemaschine (1), mit einer Vielzahl von Arbeitsaggregaten (3, 9, 15, 16) zur Bearbeitung von aufgenommenem Erntegut, welche durch eine der Erntemaschine (1) zugeordnete Steuerungsvorrichtung (28) gesteuert wird, wobei zumindest ein Arbeitsaggregat (3) durch ein Eingabemittel (31), welches mit der Steuerungsvorrichtung (28) in Wirkverbindung steht, mit einer spezifischen ersten Funktion (F1) im Erntebetrieb angesteuert wird, **dadurch gekennzeichnet,**
**dass** dem Eingabemittel (31) durch die Steuerungsvorrichtung (28) in Abhängigkeit von einer Betriebszustandsänderung eine von der ersten Funktion (F1) abweichende zweite Funktion (F2) zugewiesen wird, die für das Arbeitsaggregat (3) in einem vom Erntebetrieb abweichenden Betriebszustand spezifisch ist.

2. Verfahren nach Anspruch 1, **dadurch gekennzeichnet, dass** durch die zweite Funktion (F2) das Arbeitsaggregat (3, 21) derart angesteuert wird, dass eine automatische Überführung des Arbeitsaggregates (3, 21) in eine Arbeitsstellung (A) oder eine Transportstellung (T) durchgeführt wird.

3. Verfahren nach Anspruch 2, **dadurch gekennzeichnet, dass** die Betätigungsdauer des Eingabemittels (31) zur Überführung in eine der beiden Stellungen (A, T) in Abhängigkeit von der Fahrgeschwindigkeit der Erntemaschine (1) bestimmt wird.

4. Verfahren nach Anspruch 3, **dadurch gekennzeichnet, dass** die Betätigungsdauer des Eingabemittels (31) überwacht wird.

5. Verfahren nach einem der Ansprüche 2 bis 4, **dadurch gekennzeichnet, dass** das Arbeitsaggregat (3, 21) automatisch in die Arbeitsstellung (A) überführt wird, welche als letzte Arbeitsstellung des Arbeitsaggregates (31) von der Steuerungsvorrichtung (28) gespeichert wurde.

6. Verfahren nach einem der Ansprüche 2 bis 5, **dadurch gekennzeichnet, dass** das Erreichen der Arbeitsstellung (A) oder der Transportstellung (T) sensorisch überwacht wird.

7. Verfahren nach einem der Ansprüche 2 bis 5, **dadurch gekennzeichnet, dass** mit dem Erreichen der Arbeitsstellung (A) oder der Transportstellung (T) auf Grund der Betätigung des Eingabemittels (31) dem Eingabemittel (31) die erste Funktion (F1) zugewiesen wird.

8. Selbstfahrende Erntemaschine (1), mit einer Vielzahl von Arbeitsaggregaten (3, 9, 15, 16, 21) zur Bearbeitung von aufgenommenem Erntegut, welche durch eine der Erntemaschine (1) zugeordnete Steuerungsvorrichtung (28) steuerbar sind, wobei zumindest ein Arbeitsaggregat (3) durch ein Eingabemittel (34), welches mit der Steuerungsvorrichtung (28) in Wirkverbindung steht, hinsichtlich einer spezifischen ersten Funktion (F1) im Erntebetrieb ansteuerbar ist, **dadurch gekennzeichnet, dass** dem Eingabemittel (31) durch die Steuerungsvorrichtung (28) in Abhängigkeit von einer Betriebszustandsänderung eine von der ersten Funktion (F1) abweichende zweite Funktion (F2) zuweisbar ist, die für das Arbeitsaggregat (3) in einem vom Erntebetrieb abweichenden Betriebszustand spezifisch ist.

9. Selbstfahrende Erntemaschine (1) nach Anspruch 8, **dadurch gekennzeichnet, dass** die zweite Funktion (F2) der Überführung des Arbeitsaggregates in eine Arbeitsstellung (A) oder Transportstellung (T) dient.

10. Selbstfahrende Erntemaschine (1) nach einem der Ansprüche 8 oder 9, **dadurch gekennzeichnet, dass** die Ausführbarkeit der zweiten Funktion (F2) von der Fahrgeschwindigkeit der Erntemaschine (1) abhängig ist.

11. Selbstfahrende Erntemaschine (1) nach einem der Ansprüche 8 bis 10, **dadurch gekennzeichnet, dass** die Erntemaschine als Mähdrescher (1) ausgeführt ist.

12. Selbstfahrende Erntemaschine (1) nach Anspruch 11, **dadurch gekennzeichnet, dass** das Arbeitsaggregat ein Schneidwerk (3) ist.

## Claims

1. A method of operating a self-propelled harvester (1) having a plurality of working assemblies (3, 9, 15, 16) for processing picked-up crop material, which is controlled by a control device (28) associated with the harvester (1), wherein at least one working assembly (3) is actuated by an input means (31) operatively connected to the control device (28) with a specific first function (F1) in the harvesting mode of operation,
**characterised in that** a second function (F2) differing from the first function (F1) is assigned to the input means (31) by the control device (28) in dependence on a change in operating state, which second function is specific for the working assembly (3) in an operating state differing from the harvesting mode.

2. A method according to claim 1 **characterised in that** the working assembly (3, 21) is actuated by the second function (F2) in such a way that automatic transfer of the working assembly (3, 21) into a working position (A) or a transport position (T) is carried out.

3. A method according to claim 2 **characterised in that** the duration of actuation of the input means (31) for transfer into one of the two positions (A, T) is determined in dependence on the travel speed of the harvester (1).

4. A method according to claim 3 **characterised in that** the duration of actuation of the input means (31) is monitored.

5. A method according to one of claims 2 to 4 **characterised in that** the working assembly (3, 21) is automatically transferred into the working position (A) which was stored by the control device (28) as the last working position of the working assembly (31).

6. A method according to one of claims 2 to 5 **characterised in that** the attainment of the working position (A) or the transport position (T) is monitored by sensor means.

7. A method according to one of claims 2 to 5 **characterised in that** the first function (F1) is assigned to the input means (31) with the attainment of the working position (A) or the transport position (T) on the basis of actuation of the input means (31).

8. A self-propelled harvester (1) having a plurality of working assemblies (3, 9, 15, 16, 21) for processing picked-up crop material, which are controllable by a control device (28) associated with the harvester (1), wherein at least one working assembly (3) is actuable in respect of a specific first function (F1) in the harvesting mode by an input means (34) operatively connected to the control device (28), **characterised in that** a second function (F2) differing from the first function (F1) is assigned to the input means (31) by the control device (28) in dependence on a change in operating state, which second function is specific for the working assembly (3) in an operating state differing from the harvesting mode.

9. A self-propelled harvester (1) according to claim 8 **characterised in that** the second function (F2) serves for transfer of the working assembly into a working position (A) or a transport position (T).

10. A self-propelled harvester (1) according to one of claims 8 and 9 **characterised in that** the executability of the second function (F2) is dependent on the travel speed of the harvester (1).

11. A self-propelled harvester (1) according to one of claims 8 to 10 **characterised in that** the harvester is in the form of a combine harvester (1).

12. A self-propelled harvester (1) according to claim 11 **characterised in that** the working assembly is a header (3).

## Revendications

1. Procédé pour exploiter une machine de récolte automotrice (1), comprenant une pluralité d'organes de travail (3, 9, 15, 16) pour le traitement de produit de récolte ramassé, ledit traitement étant commandé par l'intermédiaire d'un dispositif de commande (28) associé à la machine de récolte (1), au moins un organe de travail (3) étant commandé, par l'intermédiaire d'un moyen d'entrée (31) en liaison active avec le dispositif de commande (28), avec une première fonction spécifique (F1) en mode de récolte, **caractérisé en ce qu'**au moyen d'entrée (31) est affectée, par l'intermédiaire du dispositif de commande (28), en fonction d'une modification d'état de fonctionnement, une seconde fonction (F2) qui diffère de la première fonction (F1) et qui est spécifique à l'organe de travail (3) dans un état de fonctionnement différant du mode de récolte.

2. Procédé selon la revendication 1, **caractérisé en ce que**, par l'intermédiaire de la seconde fonction (F2), l'organe de travail (3, 21) est commandé de façon à réaliser un transfert automatique de l'organe de travail (3, 21) dans une position de travail (A) ou dans une position de transport (T).

3. Procédé selon la revendication 2, **caractérisé en ce que** la durée d'actionnement du moyen d'entrée (31) pour le transfert dans une des deux positions (A, T) est déterminée en fonction de la vitesse de marche de la machine de récolte (1).

4. Procédé selon la revendication 3, **caractérisé en ce que** la durée d'actionnement du moyen d'entrée (31) est surveillée.

5. Procédé selon une des revendications 2 à 4, **caractérisé en ce que** l'organe de travail (3, 21) est transféré automatiquement dans la position de travail (A) qui a été mémorisée comme dernière position de travail de l'organe de travail (31) par le dispositif de commande (28).

6. Procédé selon une des revendications 2 à 5, **caractérisé en ce que** l'atteinte de la position de travail (A) ou de la position de transport (T) est surveillée à l'aide de capteurs.

7. Procédé selon une des revendications 2 à 5, **caractérisé en ce que**, avec l'atteinte de la position de travail (A) ou de la position de transport (T), en raison de l'actionnement du moyen d'entrée (31), la première fonction (F1) est affectée au moyen d'entrée (31).

8. Machine de récolte automotrice (1), comprenant une pluralité d'organes de travail (3, 9, 15, 16, 21) pour le traitement de produit de récolte ramassé, lesquels peuvent être commandés par l'intermédiaire d'un dispositif de commande (28) associé à la machine de récolte (1), au moins un organe de travail (3) pouvant être commandé, par l'intermédiaire d'un moyen d'entrée (34) en liaison active avec le dispositif de commande (28), en vue d'une première fonction spécifique (F1) en mode de récolte, **caractérisée en ce qu'**au moyen d'entrée (31) peut être affectée, par l'intermédiaire du dispositif de commande (28), en fonction d'une modification d'état de fonctionnement, une seconde fonction (F2) qui diffère de la première fonction (F1) et qui est spécifique à l'organe de travail (3) dans un état de fonctionnement différant du mode de récolte.

9. Machine de récolte automotrice (1) selon la revendication 8, **caractérisée en ce que** la seconde fonction (F2) sert au transfert de l'organe de travail dans une position de travail (A) ou une position de transport (T).

10. Machine de récolte automotrice (1) selon une des revendications 8 ou 9, **caractérisée en ce que** la possibilité de réaliser la seconde fonction (F2) dépend de la vitesse de marche de la machine de récolte (1).

11. Machine de récolte automotrice (1) selon une des revendications 8 à 10, **caractérisée en ce que** la machine de récolte est conformée en moissonneuse-batteuse (1).

12. Machine de récolte automotrice (1) selon la revendication 11, **caractérisé en ce que** l'organe de travail est un tablier de coupe (3).
